Europäisches Patentamt

European Patent Office

Office européen des brevets

(11) Veröffentlichungsnummer: **0 391 309**
**A1**

(12) **EUROPÄISCHE PATENTANMELDUNG**

(21) Anmeldenummer: **90106283.6**

(22) Anmeldetag: **02.04.90**

(51) Int. Cl.⁵: **B65G 69/02**

(30) Priorität: **07.04.89 DE 3911228**

(43) Veröffentlichungstag der Anmeldung:
**10.10.90 Patentblatt 90/41**

(84) Benannte Vertragsstaaten:
**BE DE FR GB IT**

(71) Anmelder: **DEERE & COMPANY**
**1 John Deere Road**
**Moline, Illinois 61265(US)**

(72) Erfinder: **Jung, Egon**
**Lerchenstrasse 1**
**D-6660 Zweibrücken(DE)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Befüllvorrichtung für einen Behälter.**

㊗ Befüllvorrichtung (12) für Behälter, z. B. Korntanks an Mähdreschern mit einer Verteilvorrichtung
(16), die das in den Behälter (10) geförderte Gut
verteilt und stets eine im wesentlichen parallel zu
der Oberkante (22) verlaufende Ebene des Guthaufens bildet.

Die Erfindung betrifft eine Befüllvorrichtung für einen Behälter, insbesondere für einen Korntank eines Mähdreschers, mit einem Eintragsförderer, der einen Auslaß für das Fördergut aufweist.

Eine der bekannten Befüllvorrichtungen (Prospekt: LAVERDA Mähdrescher M 132, Druckvermerk 1ª Ediz. 1979/001) ist derart ausgebildet, daß ein aus einem Rohr und einer Schnecke bestehender und sich schräg in einen Korntank erstrekkender Eintragsförderer an seinem oben gelegenen Endbereich einen Auslaß aufweist, aus dem das Schüttgut austritt und in dem Korntank einen Schüttkegel bildet. Damit der Korntank möglichst vollständig gefüllt wird, ragt der Eintragsförderer nach oben bis über die Seitenwände des Behältnisses hinaus.

Ein mit einer deratigen Befüllvorrichtung verbundenes Problem ist darin zu sehen, daß der Eintragsförderer nicht mehr über den Korntank hinausragen kann, wenn zum Erreichen eines großen Fassungsvermögens bei Mähdreschern der Korntank bis zur höchstmöglichen Stelle reichen soll, die das Bahnprofil erlaubt.

Es ist ferner hinlänglich bekannt, im Korntank eines Mähdreschers eine quer verlaufende Verteilerschnecke vorzusehen, die das von dem Eintragsförderer zugeführte Fördergut in dem Korntank verteilt. Einer derartigen Befüllvorrichtung haftet jedoch der Nachteil an, daß die Verteilerschnecke im gefüllten Zustand des Korntanks einem Staudruck von unten ausgesetzt ist, daß sie keine optimale Verteilung des Förderguts in dem Behälter erreichen kann, und daß sie zur Unfallverhütung abzudecken ist.

Die der Erfindung zugrunde liegende Aufgabe wird darin gesehen, eine Befüllvorrichtung für einen Behälter mit einem Eintragsförderer, der einen Auslaß für das Fördergut aufweist, zu entwickeln, mit der es gelingt, das Fördergut möglichst überall und gleichmäßig in dem Behälter zu verteilen.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise wird verhindert, daß das Fördergut nur direkt nach unten fällt und einen Schüttkegel aufbaut, sondern es wird auch von der im Bereich des Schnittpunkts der horizontal verlaufenden Diagonalen gelegenen Verteilvorrichtung in die entlegensten Kanten des Behälters geschleudert. Die Oberfläche des Schüttguts bleibt dann im wesentlichen eben und bildet keinen Kegel.

Die Wurfkraft ist umso stärker, wenn die Verteilvorrichtung aktiv wirkt, d. h. ein angetriebenes Verteilelement aufweist, das dem Fördergut einen zusätzlichen Impuls verleiht. Es kann sich dabei um ein umlaufendes Verteilelement, z. B. ein Wurfband, ein Schaufelrad, eine Turbine oder dergleichen handeln. Es kann aber auch, was einen besonderen Vorteil darstellt, als Rotor, insbesondere mit nachgiebigen Flügeln, ausgebildet sein. Derartige Flügel können beispielsweise aus einem verstärkten Gummi oder dergleichen bestehen, die zudem den Vorteil haben, daß sie sich um eine Rotorwelle wickeln können, falls der Behälter einmal überfüllt ist.

Eine Ersparnis an Antriebsteilen ergibt sich, wenn das Verteilelement und das Förderelement in dem Eintragsförderer gemeinsam angetrieben werden, z. B. in Reihe, so daß mit einem einfachen Winkelgelenk der Antrieb von dem Förderelement auf das Verteilelement übertragen werden kann. Dennoch mag es auch Einsatzverhältnisse geben, in denen es günstiger ist, das Verteilelement getrennt von dem Förderelement anzutreiben, wozu z. B. ein Hydraulikmotor verwendet werden kann.

Anstatt eines angetriebenen Verteilelements kann auch ein starres Verteilelement mit Leitblechen ausreichend sein, dem das Fördergut von dem Förderelement zugeworfen wird, und dessen Leitbleche es zu den entsprechenden Stellen im Behälter ablenken; ein derartiges starres Verteilelement setzt allerdings voraus, daß das Förderelement eine hohe Wurfwirkung besitzt.

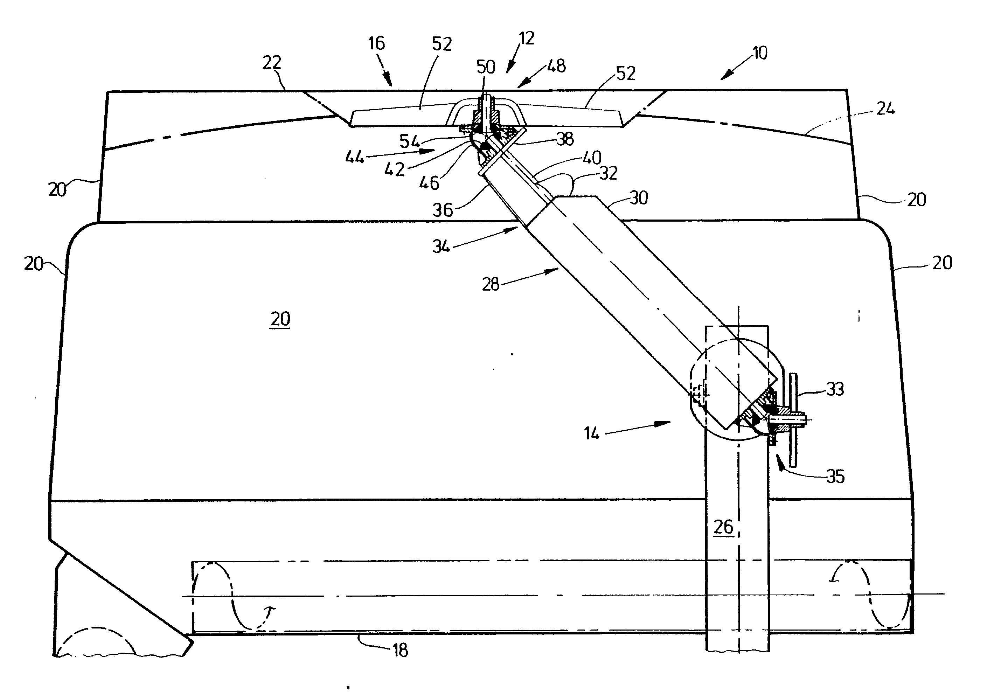

In der Zeichnung ist ein nachfolgend näher beschriebenes Ausführungsbeispiel der Erfindung dargestellt.

Die einzige Figur zeigt einen Behälter 10 mit einer Befüllvorrichtung 12, die sich im wesentlichen aus einem Eintragsförderer 14 und einer Verteilvorrichtung 16 zusammensetzt.

Der Behälter 10 weist einen Boden 18 auf und ist von Wänden 20 umgeben, die eine gemeinsame Oberkante 22 bilden.

Die Befüllvorrichtung 12, die gemäß den nachfolgenden Ausführungen ausgebildet ist, dient dazu, von dem Eintragsförderer 14 zugeführtes Gut derart in dem Behälter 10 zu verteilen, daß dessen Oberfläche im geschütteten Zustand annähernd mit einer durch die Oberkante 22 verlaufenden Ebene zusammenfällt. In der Praxis wird wohl eine Befüllung bis an eine mit 24 bezeichnete Linie erreicht werden.

Der Eintragsförderer 14 setzt sich in diesem Ausführungsbeispiel aus einem unteren und einem oberen Abschnitt 26 und 28 zusammen.

In dem unteren Abschnitt 26 wird das Fördergut z. B. mittels eines nicht gezeigten Paddelelevators zu dem oberen Abschnitt 28 gefördert.

Im oberen Abschnitt 28 ist der Eintragsförderer 14 mit einem rohrförmigen Gehäuse 30 und einem koaxial darin drehenden und als Schnecke ausgebildeten Förderelement 32 versehen. Das Förderelement 32 wird über ein als Riemen- oder Kettenrad ausgebildetes Antriebsrad 33 und ein Winkelgetriebe 35 angetrieben. Das Antriebsrad 33 wirkt bei diesem Ausführungsbeispiel gleichzeitig auf ein nicht gezeigtes Antriebsrad des Paddelelevators in dem unteren Abschnitt 26. Das Gehäuse 30 verläuft unter einem Winkel von ungefähr 45° zu der Horizontalen und läuft über einen Auslaß 34 nahe dem Schnittpunkt der waagrecht verlaufenden Diagonalen des Behälters 10 aus. Das Gehäuse 30 kann zusätzlich, ohne daß dies dargestellt ist, mit Streben in dem Behälter 10 gestützt werden.

Das Gehäuse 30 enthält einen Rahmen 36, der sich axial über das Gehäuse 30 hinaus erstreckt, endseitig abgewinkelt ist und ein Lager 38 für die drehbare Aufnahme einer Welle 40 des Förderelements 32 hält.

Die Welle 40 ist auf ihrem über das Lager 38 hinausragenden Bereich mit einem Zahnrad 42 verbunden. Das Zahnrad 42 ist ein Teil eines Winkelgetriebes 44, das in einem Getriebegehäuse 46 untergebracht und an den Rahmen 36 angeschraubt ist. Die Winkelgetriebe 35, 44 sind zur besseren Übersicht in Vertikalschnitt gezeichnet, in der Wirklichkeit aber in abgedichteten Gehäusen eingeschlossen.

Die Verteilvorrichtung 16 setzt sich im wesentlichen aus einem als Rotor ausgebildeten Verteilelement 48 mit einer sich senkrecht nach unten erstreckenden Rotorwelle 50 und Flügeln 52 zusammen.

Der Durchmesser des Verteilelements 48 mit den Flügeln 52 beträgt bei diesem Ausführungsbeispiel ca. ein Drittel der Breite des Behälters 10. Das Verteilelement 48 bleibt stets in der gleichen Lage und bewegt seine Flügel 52 in einer im wesentlichen waagrechten Ebene.

Die Rotorwelle 50 verläuft im wesentlichen senkrecht und ist an ihrem unteren Endbereich drehfest mit einem Zahnrad 54 des Winkelgetriebes 44 verbunden, das mit dem Zahnrad 42 kämmt. In ihrem oberen Endbereich ist die Rotorwelle 50 mit den sich diametral ersteckenden Flügeln 52 versehen.

Der Antrieb des Verteilelements 48 mit den Flügeln 52 erfolgt dann von dem Ketten- oder Riemenrad 33, über das Winkelgetriebe 35, das Förderelement 32, die Zahnräder 42, 54 in dem winkelgetriebe 44 und die Rotorwelle 50. Demnach werden der Paddelelevator, das Förderelement 32 und das Verteilelement 48 gemeinsam, voneinander abhängig und in Reihe von einem einzigen Antriebseingang, nämlich dem Ketten- oder Riemenrad 33 aus angetrieben. Andere Antriebsmöglichkeiten bestehen darin, jedes dieser Elemente getrennt, z. B. mittels eines Hydraulikmotors, anzutreiben.

Die Funktion der erfindungsgemäßen Befüllvorrichtung 12 ergibt sich nach dem vorstehend Beschriebenen wie folgt.

Zu Beginn des Füllvorgangs ist der Behälter 10 bis auf den Boden 18 leer. Sobald das Antriebsrad 33 in Drehung versetzt wird, bewegen sich der Paddelelevator, das Förderelement 32 und das Verteilelement 48. Der Paddelelevator fördert ihm aufgegebenes Fördergut zu dem Förderelement 32 in den oberen Abschnitt 28. In dem oberen Abschnitt 28 wird das Fördergut mittels des Förderelements 32 dem Auslaß 34 zugeführt, wo es - je nach Wurfkraft des Förderelements 32 - mehr oder weniger in den Bewegungskreis der Flügel 52 geschleudert wird. Der von den Flügeln 52 erfaßte

Anteil wird in die entlegensten Ecken des Behälters 10 und an die Wände 20 geschleudert; der von den Flügeln 52 nicht erfaßte Anteil fällt leicht verstreut nach unten und füllt den mittleren Bereich des Behälters 10. Sobald das Fördergut in dem Behälter 10 einen Pegel geringfügig unterhalb der Flügel 52 erreicht hat, bewegt das Verteilelement 48 dieses von dem Auslaß 34 weg in die Randzonen, beseitigt somit den Staudruck in diesem Bereich und entlastet den oberen Abschnitt 28 gewichtsmäßig. Eine Verteilung des Förderguts findet selbst dann noch statt, und der Aufbau eines Schüttkegels wird selbst dann noch verhindert, wenn die Flügel 52 bereits in dem Fördergut rotieren; in diesem Fall hat der Behälter 10 aber bereits nahezu sein maximales Fassungsvermögen erreicht.

Zur Sicherheit kann vorgesehen werden, daß die Flügel 52 entweder in sich nachgiebig oder an der Rotorwelle 50 nachgiebig angebracht sind, so daß sie sich bei einem zu hohen Fördermoment bei gefülltem Behälter 10 um die Rotorwelle 50 wickeln oder dieser in Umfangsrichtung nacheilen können.

## Ansprüche

1. Befüllvorrichtung (12) für einen Behälter (10), insbesondere für einen Korntank eines Mähdreschers, mit einem Eintragsförderer (14), der einen Auslaß (34) für das Fördergut aufweist, dadurch gekennzeichnet, daß der Eintragsförderer (14) an seinem Auslaß (34) mit einer Verteilvorrichtung (16) versehen ist, die das Fördergut von einem zentrisch gelegenen Mittenbereich zu Wänden (20) führt.

2. Befüllvorrichtung nach Anspruch 1, dadurch gekennzeichnet, daß die Verteilvorrichtung (16) ein angetriebenes Verteilelement (48) aufweist.

3. Befüllvorrichtung nach Anspruch 2, dadurch gekennzeichnet, daß das Verteilelement (48) als Rotor ausgebildet ist.

4. Befüllvorrichtung nach Anspruch 2 oder 3, dadurch gekennzeichnet, daß ein Förderlement (32) des Eintragsförderers (14) und das Verteilelement (48) gemeinsam angetrieben werden.

5. Befüllvorrichtung nach einem oder mehreren der vorherigen Ansprüche, dadurch gekennzeichnet, daß das als Rotor ausgebildete Verteilelement (48) mit nachgiebigen Flügeln (52) versehen ist.

6. Befüllvorrichtung nach Anspruch 1, dadurch gekennzeichnet, daß die Verteilvorrichtung (16) ein starres Verteilelement (48) mit Leitblechen aufweist, denen das Fördergut von dem Eintragsförderer (14) zugeworfen wird.

EP 0 391 309 A1

Europäisches Patentamt

# EUROPÄISCHER RECHERCHENBERICHT

Nummer der Anmeldung

EP 90106283.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int CI⁵) |
|---|---|---|---|
| X | US - A - 3 490 619 (DEWITTIE) * Gesamt * | 1-3 | B 65 G 69/02 |
| X | US - A - 2 770 354 (MORRISON) * Gesamt * | 1-3 | |
| X | DE - B - 1 809 197 (HITACHI LTD) * Gesamt * | 1-3 | |
| A | | 6 | |

| RECHERCHIERTE SACHGEBIETE (Int CI⁵) |
|---|
| B 65 G |

Der vorliegende Recherchenbericht wurde für alle Patentansprüche erstellt.

| Recherchenort | Abschlußdatum der Recherche | Prüfer |
|---|---|---|
| WIEN | 13-07-1990 | PISSENBERGER |